# EUROPÄISCHE PATENTSCHRIFT

(11) **EP 2 612 549 B1**
(45) Veröffentlichungstag und Bekanntmachung des Hinweises auf die Patenterteilung: **06.07.2016**
(21) Anmeldenummer: 13000025.0
(22) Anmeldetag: 04.01.2013
(51) Int. Cl.: E04H 7/26, A01F 25/16

(54) **Abdichtungssystem für Innenflächen von Betonseitenwänden von Siloanlagen, Siloanlage mit demselben, Verfahren zur Herstellung des Abdichtungssystems und Verfahren zum Überprüfen des Dichtigkeitszustands einer derartigen Siloanlage**
Sealing system for the inner surfaces of concrete side walls of silo systems, silo system having the same, method for producing the sealing system and method for checking the consistence condition such a silo system
Système d'étanchéification pour surfaces intérieures de parois latérales en béton de silos, silo doté de celui-ci, procédé de fabrication du système d'étanchéification et procédé de surveillance de l'état d'étanchéité d'un tel silo

(30) Priorität: 06.01.2012 DE 102012000385
(43) Veröffentlichungstag der Anmeldung: 10.07.2013
(73) Patentinhaber: Green Protection GmbH, 91522 Ansbach (DE)
(72) Erfinder: Ströhlein, Friedrich, 91522 Ansbach (DE)
(74) Vertreter: Manasse, Uwe

(56) Entgegenhaltungen:
- DE-A1- 10 014 805
- DE-A1- 19 950 466
- DE-U1-202007 012 624
- GB-A- 2 263 781

## Beschreibung

Die vorliegende Erfindung betrifft ein Abdichtungssystem für Innenflächen von Betonseitenwänden von Siloanlagen, insbesondere Flachsiloanlagen, eine Siloanlage, insbesondere Flachsiloanlage, ein Verfahren zur Herstellung des Abdichtungssystems sowie ein Verfahren zum Überprüfen des Dichtigkeitszustands der Siloanlage. Genauer gesagt betrifft die vorliegende Erfindung unter anderem eine druckwasserdichte Siloanlage, insbesondere Flachsiloanlage. DE-U-202007012624 offenbart ein Dichtungssystem wobei Dichtungsbahnen in einem Baukörper an den aufstehenden Seitenwändensenkrecht angebracht werden und mit Befestigungselementen an den Seitenwänden befestigt werden. Im Zusammenhang mit dem Bau von Biogasanlagen wurden und werden große Flachsiloanlagen gebaut, die in ihrer Dimension nicht mit landwirtschaftlichen Futterlagersilos vergleichbar sind. Es können Füllhöhen von über 10 m erreicht werden, was am Fuß der Flachsiloanlage einen Sickersaftdruck von mehr als 1 bar bedeutet. Bei einer Füllhöhe der Flachsiloanlage von ca. 10 m kann sich ein kurzfristiger Sickersaft-Spiegel von über 3 m ergeben. Der Sickersaft darf nicht in das Grundwasser gelangen, weil er sehr viel Sauerstoff im Wasser verbraucht und das Gleichgewicht im Ökosystem beeinträchtigt.

In diesem Zusammenhang ist auch zu erwähnen, dass beim Befüllen die Flachsiloanlagen bis über die Oberkante der Seitenwände gefüllt und das Siliergut mit schwerem Gerät verdichtet wird. Es entstehen dadurch hohe Drücke und extreme Scherkräfte auf die Seitenwände und Einbauten an denselben. Außerdem sind Schläge durch unbeabsichtigtes Anfahren der Seitenwände beispielsweise mit Traktoren, Pneuladern (z. B. 25/35 t), Pistenraupen oder anderen Schub- und Förderfahrzeugen nicht zu vermeiden. Da das Siliergut durch diese Schubgeräte von der Entladestelle von links und rechts auf eine Lagerhöhe von mehr als 10 m geschoben wird, müssen Kanten, Ansätze und dgl. an den Seitenwänden, die sich in vertikaler Richtung erstrecken, möglichst vermieden werden.

Während und nach der Entnahme sind die Bauteile, wie Bodenplatte und Seitenwand (Wandscheibe) hohen Temperaturdifferenzen ausgesetzt. Auf der freigelegten Fläche können Oberflächentemperaturen von -20 ° C im Winter und +50 °C im Sommer auftreten. Dadurch entstehen hohe Spannungen, wodurch Risse im Beton entstehen können.

Schätzungsweise 95 % der bestehenden Flachsiloanlagen sind nicht druckwasserdicht. Die meisten der am Markt angebotenen Flachsiloanlagen entsprechen nicht den Anforderungen einer druckwasserdichten Bauweise.

Der Erfindung liegt somit die Aufgabe zugrunde, sowohl beim Neubau als auch bei der Sanierung eine druckwasserdichte Siloanlage, insbesondere Flachsiloanlage, bereitzustellen, die keine oder nur wenige vertikale Stoßkanten aufweist, wobei vorzugsweise die Druckwasserdichtigkeit auch nachweisbar sein soll.

Erfindungsgemäß wird diese Aufgabe gemäß einem ersten Aspekt gelöst durch ein Abdichtungssystem für Innenflächen von Betonseitenwänden von Siloanlagen, insbesondere Flachsiloanlagen, umfassend eine horizontal, vorzugsweise maschinell, verlegte Kunststoffbahn oder mehrere horizontal, vorzugsweise maschinell, verlegte, vorzugsweise überlappend angeordnete und miteinander, vorzugsweise maschinell, verschweißte Kunststoffdichtungsbahnen zur vollflächigen Abdeckung einer Innenfläche einer Betonseitenwand einer Siloanlage, und mehrere, vorzugsweise rasterförmig angeordnete, Befestigungselemente zur vorzugsweise mechanischen Befestigung der Kunststoffdichtungsbahn(en) an der Innenfläche der Betonseitenwand der Siloanlage. Bei der Siloanlage bzw. Flachsiloanlage kann es sich zum Beispiel um ein rechteckiges Silo ohne Stirnwände handeln. Die Kunststoffdichtungsbahnen sind vorzugsweise hochpolymere Kunststoff-Dichtungsbahnen, wie zum Beispiel Bahnen aus flexiblem Polyolefin (FPO), ECB und PVC.

Weiterhin wird diese Aufgabe gemäß einem zweiten Aspekt gelöst durch eine Siloanlage, insbesondere Flachsiloanlage, umfassend eine Bodenplatte und mindestens eine Betonseitenwand sowie ein, vorzugsweise mit der Bodenplatte eine Wanne bildendes, Abdichtungssystem nach einem der Ansprüche 1 bis 9. Bei der Bodenplatte kann es sich um eine Bodenplatte aus Beton oder um eine Bodenplatte aus Asphalt handeln. Die Standfestigkeit der Betonseitenwand ist vorzugsweise statisch nachgewiesen, so dass die Betonseitenwand unverschieblich ist.

Ferner wird diese Aufgabe gelöst durch ein Verfahren zur Herstellung eines Abdichtungssystems umfassend vorzugsweise rasterförmiges und vorzugsweise maschinelles Anordnen von mehreren Befestigungselementen zur vorzugsweise mechanischen Befestigung der Kunststoffdichtungsbahn(en) an der Innenfläche der Betonseitenwand der Siloanlage, und in einem Arbeitsgang vorzugsweise maschinelles Ausrollen der Kunststoffdichtungsbahn(en) und vorzugsweise maschinelles Befestigen der Kunststoffdichtungsbahn(en) an den Befestigungselementen.

Weiterhin liefert die Erfindung ein Verfahren zum Überprüfen des Dichtigkeitszustands einer Siloanlage, insbesondere Flachsiloanlage, mit den Schritten: a) Anschließen eines Nebel- und/oder Rauchgenerators an den Schlauchanschluss 13 und b) Detektieren des Austritts von Nebel- und/oder Rauch aus dem Abdichtungssystem, insbesondere der Kunststoffdichtungsbahn oder den Kunststoffdichtungsbahnen. Verständlicherweise ist der Nebel- und/oder Rauchgenerator nur zum Überprüfen des Dichtigkeitszustands verwendbar, wenn die Siloanlage leer ist. Hierbei kann ein handelsübliches Rauchgasgerät verwendet werden, das mit einer handelsüblichen Druckregeleinheit ausgestattet sein kann.

Darüber hinaus liefert die Erfindung ein System, umfassend eine Siloanlage nach einem der Ansprüche 10 bis 12, und eine Fernüberwachungszentrale zur Fernüberwachung der Siloanlage und/oder einen Nebel- und/oder Rauchgenerator und eine Druckregeleinheit zum Betreiben des Nebel- und/oder Rauchgenerators. Das System mit der Druckregeleinheit ermöglicht eine qualitative Aussage bzgl. der Dichtigkeit, z. B. bis 2 bar druckwasserdicht.

Ferner liefert die Erfindung ein Verfahren zum Abdichten einer Siloanlage, insbesondere Flachsiloanlage, mit dem Abdichtungssystem.

Günstigerweise umfasst das Abdichtungssystem mindestens ein mit mindestens einer der Kunststoffdichtungsbahnen verschweißtes Formblech oder Kunststoffformteil zum Abdecken mindestens eines Teils der Wandkrone der Betonseitenwand der Siloanlage. Die Verschweißung kann vorzugsweise mit Hilfe des Heißluftschweißverfahrens erfolgen. Andere Schweißverfahren, wie zum Beispiel Quellschweißverfahren, sind auch möglich.

Vorteilhafterweise umfasst das Abdichtungssystem einen Anfahr- und/oder Scheuerschutz vorzugsweise aus Holz oder Kunststoff zum Abdecken der Wandkrone der Betonseitenwand der Siloanlage. Besonders bevorzugt wird der Anfahr- und/oder Scheuerschutz nicht direkt auf der bzw. den Kunststoffdichtungsbahn(en), sondern auf dem Formteil oder Kunststoffformteil zum Abdecken mindestens eines Teils der Wandkrone der Betonseitenwand der Siloanlage angeordnet.

Weiterhin umfasst es günstigerweise mindestens ein mit der Kunststoffdichtungsbahn oder mit mindestens einer der Kunststoffdichtungsbahnen verschweißtes und vorzugsweise am Übergang von einer Bodenplatte mit der Siloanlage verklebtes Formteil oder Kunststoffformteil zum Abdecken einer Fuge an einem Boden- oder Wandanschluss. Statt des Formteils oder Kunststoffformteils könnte aber selbstverständlich auch die oder eine Kunststoffdichtungsbahn verwendet werden.

Zweckmäßigerweise umfasst es (auch) einen Anfahr- und/oder Scheuerschutz vorzugsweise aus Holz oder Kunststoff im unteren Bereich der aufgehenden Betonseitenwand der Siloanlage.

Gemäß einer besonderen Ausführungsform der Erfindung ist mindestens eines der Befestigungselemente ein Befestigungsteller vorzugsweise aus Metall mit einer Haftbeschichtung für die Kunststoffdichtungsbahn(en). Insbesondere kann das Befestigungselement dabei als Aufschweißteil ausgebildet sein.

Gemäß einer weiteren besonderen Ausführungsform der Erfindung ist mindestens eines der Befestigungselemente ein Befestigungsstreifen vorzugsweise aus Metall mit Punkten oder Flächen mit einer Haftbeschichtung und/oder Klettflächen für die Kunststoffdichtungsbahn(en). Insbesondere ist das Befestigungselement dabei vorzugsweise als ein Aufschweißteil ausgebildet.

Vorteilhafterweise ist der Befestigungsteller oder der Befestigungsstreifen mit einem Einschlagdübel, Betonnagel oder ähnlichem Befestigungssystem an der Betonseitenwand befestigbar. Es sind aber auch andere mechanische Befestigungsarten und auch nicht mechanische Befestigungsarten denkbar.

Alternativ ist mindestens eines der Befestigungselemente ein in die Betonseitenwand eingebautes Anschweißprofil vorzugsweise aus artgleichem Kunststoff wie die Kunststoffdichtungsbahn(en).

Bei einer besonders bevorzugten Ausführungsform ist mindestens eine Leckage-Sonde zur Anordnung zwischen der Kunststoffdichtungsbahn oder den Kunststoffdichtungsbahnen und der Betonseitenwand vorgesehen. Die Sensorfläche der Leckage-Sonde ist vorzugsweise im Fußbereich der Betonseitenwand angeordnet. Die Leckage-Sonde kann auch bei voller Siloanlage zur Überwachung einer Leckage verwendet werden.

Vorteilhafterweise ist bei der Siloanlage ein Schlauchanschluss in die Kunststoffdichtungsbahn(en) zum Anschließen eines Nebel- und/oder Rauchgenerators eingebaut. Wenn dann ein Nebel- und/oder Rauchgenerator an den Schlauchanschluss angeschlossen wird, so lässt sich damit durch Einblasen von Nebel und/oder Rauch der Dichtigkeitszustand der Siloanlage und insbesondere des Abdichtungssystems überprüfen.

Schließlich kann bei der Siloanlage mit mindestens einer Leckage-Sonde vorgesehen sein, dass die Leckage-Sonde direkt oder indirekt mit einer Fernüberwachungszentrale zur Fernüberwachung der Siloanlage verbunden ist. In der heutigen Zeit können Siloanlagen dezentral angeordnet, d. h. räumlich über große Entfernungen getrennt sein. Dann macht eine zentrale Überwachung der Siloanlagen über eine Fernüberwachungszentrale besonderen Sinn.

Der Erfindung liegt die überraschende Erkenntnis zugrunde, dass durch die horizontale Verlegung der Kunststoffdichtungsbahn(en) im Normalfall, d. h. bei Kunststoffdichtungsbahnen mit einer maximalen Länge von möglicherweise 150 m, keine Stöße in der Senkrechten erforderlich sind bzw. entstehen. Über solche Längen wäre dies bei Verlegung von Hand aufgrund des Gewichts nicht möglich. Bei bspw. ca. 2 m hohen Seitenwänden ist normalerweise überhaupt kein Stoß erforderlich. Bei Seitenwänden mit einer Höhe von bis zu ca. 4,10 m ist lediglich ein horizontaler Stoß erforderlich. Bei einer Seitenwandhöhe von bis zu 6,20 m sind lediglich zwei Stöße erforderlich. Die horizontalen Stöße/Überlappungen lassen sich zumindest bei einer maschinellen Verlegung der Kunststoffdichturigsbahnen mit einer Verlegemaschine bspw. mit mindestens einer Schweißeinheit sofort dauerhaft und homogen verschweißen. Durch diese Verlegeart werden schnell druckwasserdichte Siloanlagen, insbesondere Flachsiloanlagen, sowohl beim Neubau als auch bei der Sanierung erzielt. Insbesondere lassen sich damit auf einfache Weise die Seitenwände und die Wandfugen abdichten. Gegenüber einer Beschichtung sind als Vorteile der Kunststoffdichtungsbahnen eine flächige und Fugenabdichtung (bei einer Beschichtung müsste für die Fugen eine andere Beschichtung verwendet werden), ein einfacherer Einbau sowie eine einfachere Reparatur (unabhängig vom Wetter, etc.) und die Möglichkeit der Integration einer Einrichtung zum Überprüfen und Nachweisen (bei Erstabnahme) des Dichtigkeitszustands zu nennen.

Wenn die Befestigungselemente rasterförmig angeordnet werden sollen, so können die Rasterabstände in Abhängigkeit von der Belastung frei gewählt werden. Die Rasterabstände sind von den Abmessungen der Kunststoffdichtungsbahnen unabhängig, aber von der Belastung abhängig. Je höher die Seitenwände sind, desto kleiner sind normalerweise die Rasterabstände zu wählen. Durch die rasterförmige Anordnung wird das Abdichtungssystem auch belastbarer.

Darüber hinaus besteht die Möglichkeit, Leckage-Sonden und/oder -Warneinrichtungen in das Abdichtungssystem und damit die Siloanlage zu integrieren. Vorzugsweise werden mehrere (abhängig von der Silolänge) kommunizierende Sonden eingebaut, um die Leckagestelle möglichst genau eingrenzen zu können. Alternativ kann auch unter oder in die Kunststoffdichtungsbahn ein Kunststoffgewebe, das mit Metallfasern verwirkt ist, eingebaut werden, wodurch über ein computergesteuertes Spannungsfeld punktgenau die Leckagestelle angezeigt werden kann. Die Anforderung der DIN11622-2, die Anforderungen nach WHG, sowie nach DWA-A 792 TRwS JGS werden ebenfalls erfüllt.

Weitere Vorteile und Merkmale der Erfindung ergeben sich anhand der beigefügten Ansprüche und der nachfolgenden Beschreibung, in der mehrere Ausführungsbeispiele anhand der schematischen Zeichnungen im Einzelnen beschrieben werden. Dabei zeigt:
- Figur 1: eine perspektivische Schnittansicht von einer Flachsiloanlage gemäß einer ersten besonderen Ausführungsform der Erfindung mit Anschlussbereich Betonseitenwand/Bodenplatte;
- Figur 2: eine perspektivische Schnittansicht von einer Flachsiloanlage gemäß einer zweiten besonderen Ausführungsform der Erfindung mit Anschlussbereich Betonseitenwand/Bodenplatte;
- Figur 3: eine perspektivische Schnittansicht von einer Flachsiloanlage gemäß einer dritten besonderen Ausführungsform der Erfindung mit Anschlussbereich Betonseitenwand/Bodenplatte;
- Figur 4: eine perspektivische Schnittansicht von einer Flachsiloanlage gemäß einer vierten besonderen Ausführungsform der Erfindung mit Anschlussbereich Betonseitenwand/Bodenplatte;
- Figur 5: eine Ansicht auf die Innenfläche einer Betonseitenwand einer Flachsiloanlage mit einer Kunststoffdichtungsbahnenverlegemaschine, die eine Bohr- und Ankereinheit aufweist, im Einsatz;
- Figur 6: eine Draufsicht von oben auf die Betonseitenwand mit der Kunststoffdichtungsbahnenverlegemaschine von Figur 5;
- Figur 7: eine ähnliche Draufsicht wie Figur 6, aber mit weiteren Details;
- Figur 8: eine Draufsicht von oben auf einen Anfahr- und/oder Scheuerschutz für horizontales Ausklinken gemäß einer besonderen Ausführungsform; und
- Figur 9: eine perspektivische Schnittansicht von einem Anfahr- und/oder Scheuerschutz für vertikales Ausklinken gemäß einer weiteren Ausführungsform.

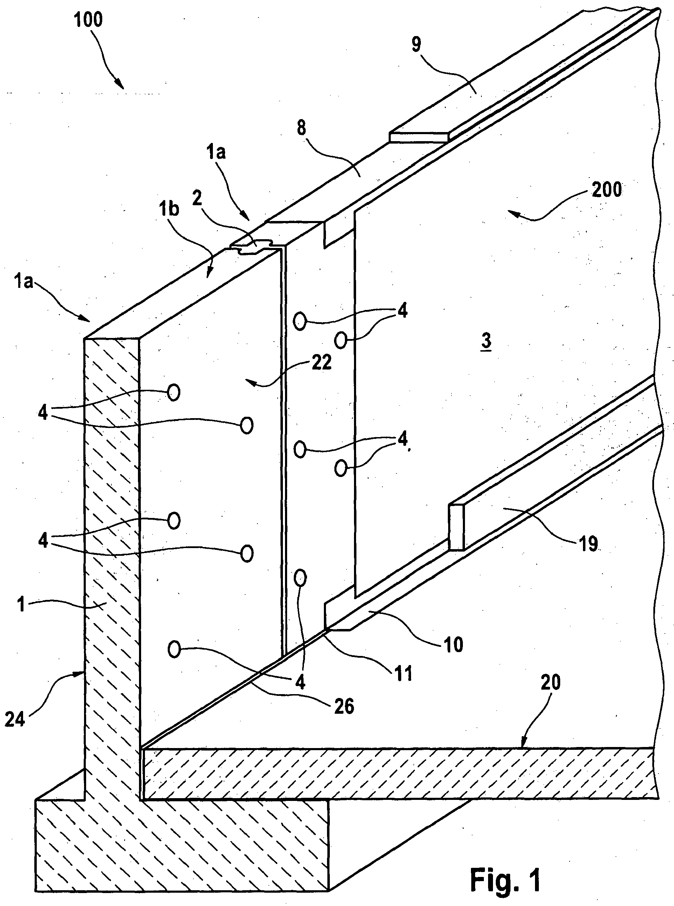

Figur 1 zeigt eine perspektivische Schnittansicht von einer Flachsiloanlage 100 gemäß einer ersten besonderen Ausführungsform der Erfindung im Anschlussbereich Betonseitenwand 1/Bodenplatte 20 aus Beton oder Asphalt. Die Betonseitenwand 1 besteht aus mehreren Betonseitenwandsegmenten 1a, so dass sich dazwischen eine vertikale Dehnungsfuge 2 (auch Fertigteilfuge oder Arbeitsfuge genannt) ergibt. Alternativ kann die Betonseitenwand 1 aber auch aus Ortbeton bestehen. Unabhängig davon, ob sie aus Ortbeton oder aus Fertigteilen, d. h. Betonseitenwandsegmenten 1a besteht, ist sie standsicher.

Zur besseren Darstellung des Aufbaus des Abdichtungssystems 200 sind dessen Komponenten nur teilweise dargestellt. Das Abdichtungssystem 200 umfasst eine oder mehrere horizontal verlegte, vertikal übereinander überlappend angeordnete und vorzugsweise homogen verschweißte Kunststoffdichtungsbahnen 3, von denen nur eine dargestellt und mit der Bezugszahl 3 gekennzeichnet ist, zur vollflächigen Abdeckung der Innenfläche 22 der Betonseitenwand 1 auf. Die Kunststoffdichtungsbahnen 3 weisen eine Stärke von vorzugsweise ca. 2 mm bis ca. 3 mm und eine Breite, d. h. Höhe, von vorzugsweise ca. 1 m bis ca. 2 m auf. Sie sind vorzugsweise mit Heißluft homogen verschweißt. Mit "homogen" soll gemeint sein, dass sie ohne einen fremden Stoff dazwischen miteinander verbunden sind. Dazu werden die Kunststoffdichtungsbahnen 3 aus dem gleichen Material, wie zum Beispiel flexiblem Polyolefin (FPO) gleichzeitig erhitzt und zum Schmelzen gebracht, die angeschmolzenen Abschnitte ineinander gepresst, zum Beispiel mittels einer Andrückrolle, und miteinander zu einem Teil verschmolzen. Anstelle einer Verschweißung können aber unter Umständen auch Alternativen verwendet werden, die eine ähnliche Funktion aufweisen.

Die Bodenplatte 20 bildet zusammen mit den Kunststoffdichtungsbahnen 3 an der Betonseitenwand 1 eine Wanne.

Die Befestigung der Kunststoffdichtungsbahnen 3 erfolgt in dieser Ausführungsform mittels Befestigungstellern 4 aus Metall, die an der Betonseitenwand 1 maschinell mit Betonschrauben (nicht gezeigt) oder mit Betonnägeln (nicht gezeigt) sowie auch händisch mit Einschlagdübeln (nicht gezeigt) befestigt sind und auf der von der Betonseitenwand 1 abgewandten Seite eine Spezialhaftbeschichtung (nicht gezeigt) aufweisen. Die Spezialhaftbeschichtung dient zum Befestigen der Kunststoffdichtungsbahnen 3 über deren Innenseiten. Dies kann zum Beispiel durch Induktionsschweißen maschinell erfolgen. Da die Befestigungsteller 4 nach dem Befestigen der Kunststoffdichtungsbahnen 3 nicht mehr zu sehen sind, können sie auch als verdeckte Aufschweißteile bezeichnet werden.

Zur Abdeckung der Wandkrone 1b der Betonseitenwand 1 umfasst das Abdichtungssystem 200 ein Formteil 8 aus Bahnen beschichteten Verbundblech, das mit der bzw. den Kunststoffdichtungsbahn(en) 3 homogen verschweißt ist. Das Formteil 8 ist im Querschnitt C-förmig gestaltet, so dass es die Oberseite und auch zum Teil die Innenfläche 22 und die Außenfläche 24 der Betonseitenwand 1 abdeckt. Bei dem Formteil 8 aus Bahnen beschichtetem Verbundblech kann es sich um ein Blech handeln, bei dem zumindest eine Seite mit einem Kunststoff beschichtet ist.

Für den Fall einer Überfüllung der Flachsiloanlage 100 umfasst das Abdichtungssystem 200 darüber hinaus noch einen Anfahr- bzw. Scheuerschutz 9 aus Holz oder Kunststoff, der auf dem Formteil 8 liegt.

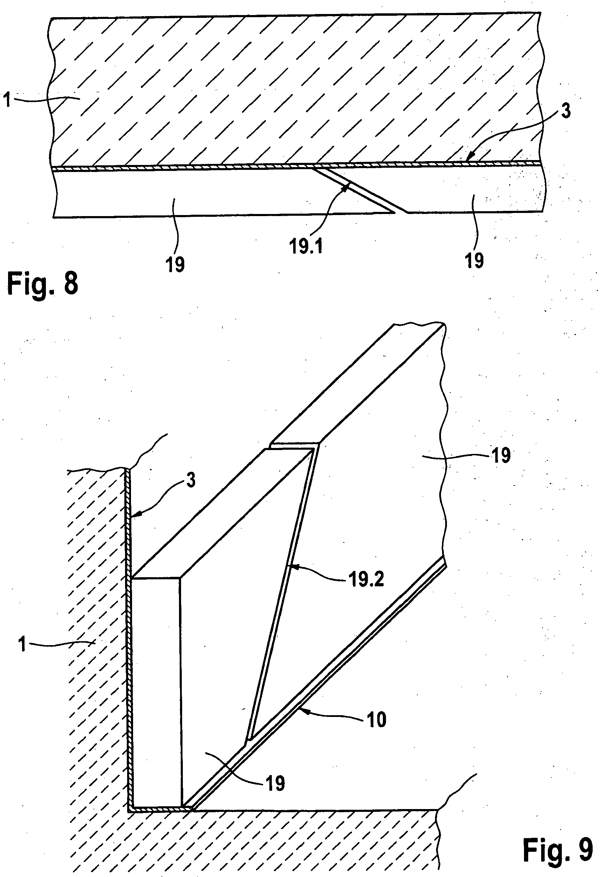

Zum Abdichtungssystem 200 gehört auch ein Formteil 10 aus Bahnen beschichteten Verbundblech zum Abdecken einer Fuge 26 am Boden- (Bodenplatte 20)/Wandanschluss (Betonseitenwand 1), das mit der bzw. den Kunststoffdichtungsbahn(en) 3 homogen verschweißt ist. Am Übergang vom Boden, d.h. von der Bodenplatte 20 zur Wand, d.h. Betonseitenwand 1, ist das Formteil 10 aus Bahnen beschichteten Verbundblech mit einer einkomponentigen PU-Fugenmasse 11 satt verklebt. Zudem gehört zum Abdichtungssystem 200 ein Anfahr- bzw. Scheuerschutz 19 aus Holz oder Kunststoff an der aufgehenden Betonseitenwand 1. Dieser Anfahr- und Scheuerschutz 19 besteht aus mehreren Einzelteile und ist an den Enden der Einzelteile so ausgebildet, dass Längskräfte nicht weitergeleitet werden können, sondern je nach Nutzungsart durch entsprechende Gestaltung der Gleitfläche 19.1 (siehe Figur 8) bzw. 19.2 (siehe Figur 9) ausbricht.

Der Anfahr- und Scheuerschutz 19 wird auf der Kunststoffdichtungsbahn 3 bzw. dem Formteil 10 mit handelsüblichem Spezialkleber punktweise verklebt, so dass bei direkter mechanischer Schubbelastung die Klebepunkte als Sollbruchflächen abscheren. Damit sich die evtl. auftretenden Schubkräfte, die aus direktem Kontakt mit den Schubfahrzeugen resultieren können, nicht auf den kompletten Anfahrschutz 19 übertragen, müssen die Teile entsprechend ausgebildet sein. Der Anfahr- und Scheuerschutz 19 wird deshalb an den Endungen mit einer Gleitfläche 19.1 bzw. 19.2 ausgebildet, so dass bei einer direkten mechanischen Schubbelastung nur das direkt vom Schub betroffene Einzelteil ausklinkt.

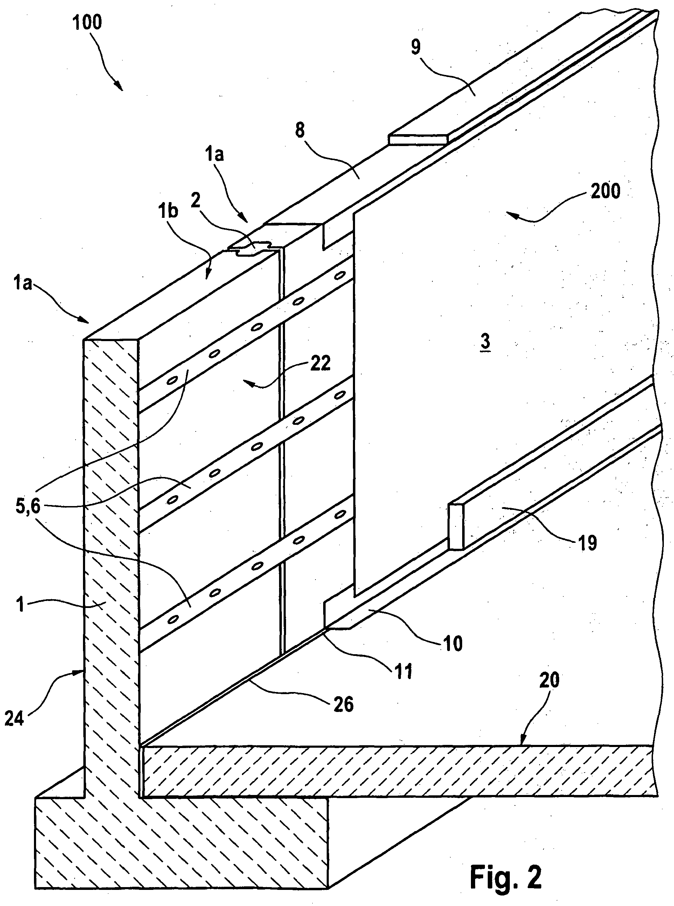

Die in der Figur 2 gezeigte Ausführungsform unterscheidet sich von der in der Figur 1 gezeigten Ausführungsform in den Befestigungselementen. Anstelle der Befestigungsteller 4 sind zwei Alternativen, nämlich Befestigungsstreifen vorzugsweise aus Metall mit Punkten oder Flächen mit einer Haftbeschichtung, also zum Beispiel Befestigungsstreifen 5 aus Bahnen beschichtetem Verbundblech, oder Klettflächen (Befestigungsstreifen 6) für die Kunststoffdichtungsbahnen vorgesehen. Diese Ausführungsform kann bei kleinen Siloanlagen gewählt werden, wo sich eine maschinelle Verlegung nicht anbietet.

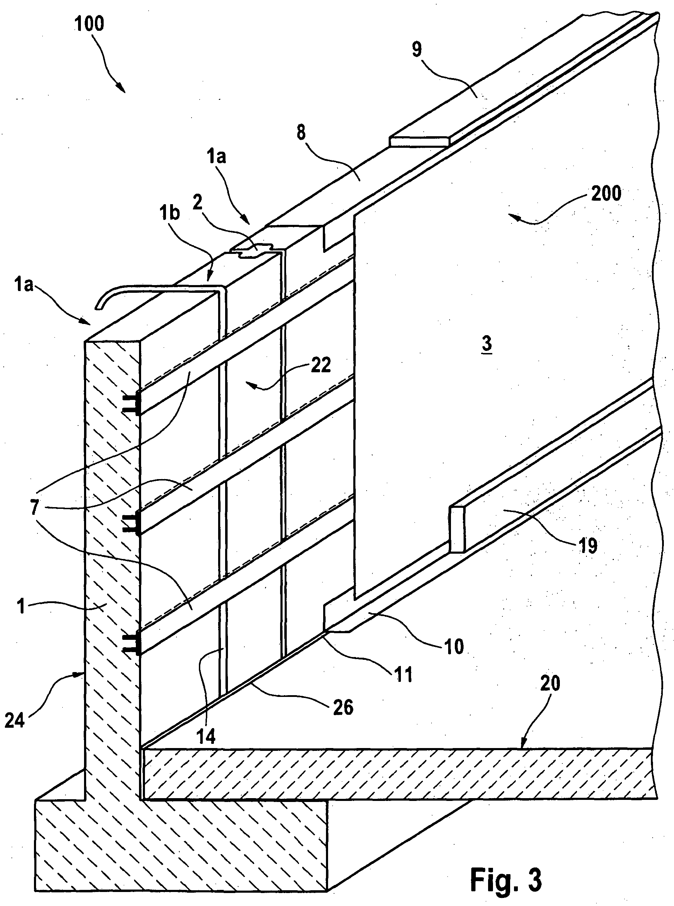

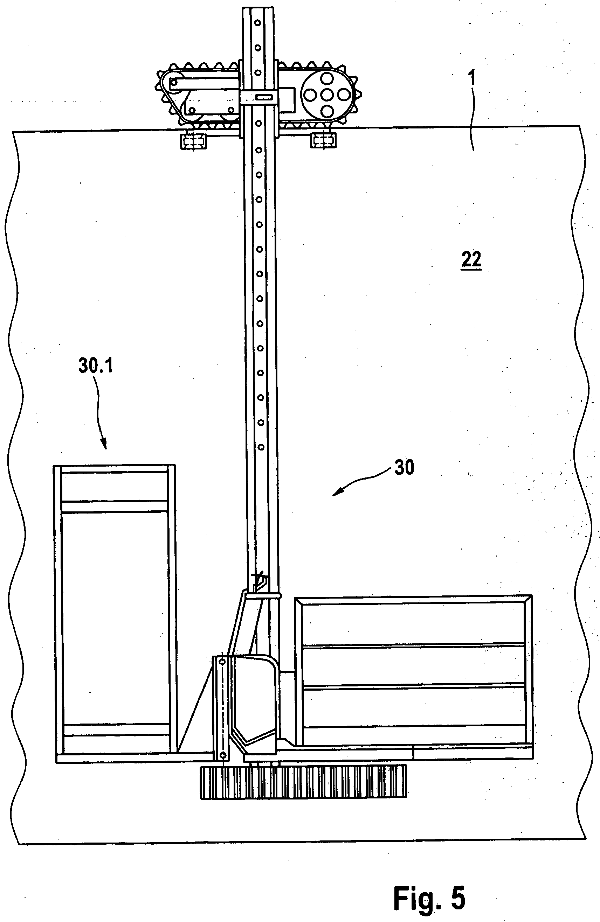

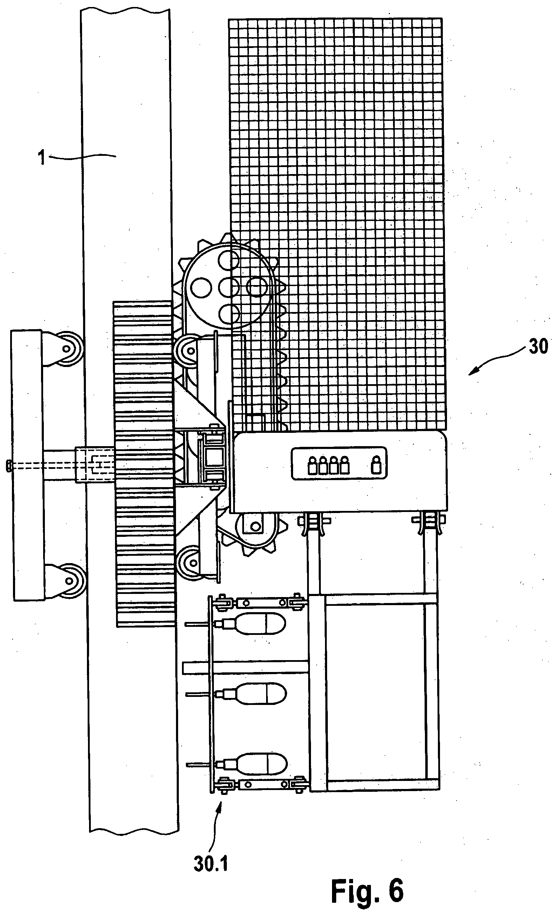

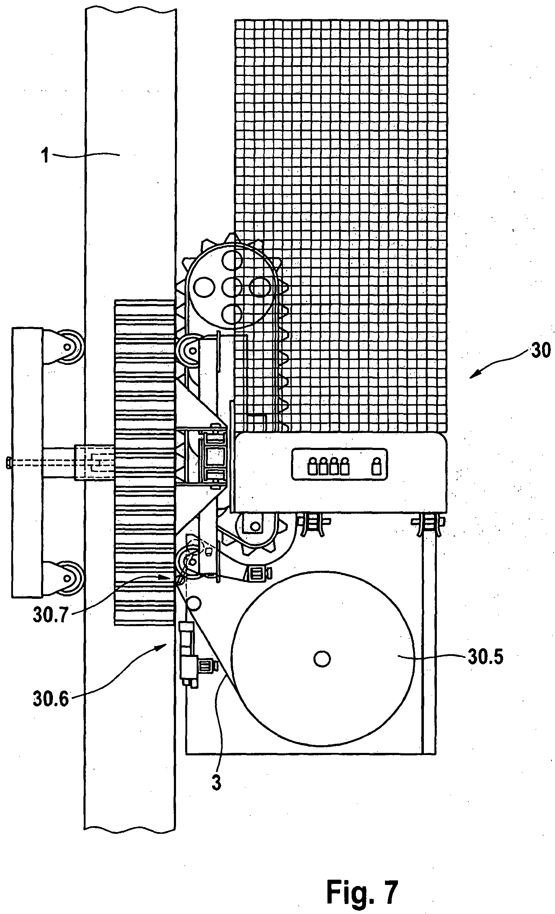

Die in der Figur 3 gezeigte Ausführungsform unterscheidet sich von der in der Figur 1 gezeigten Ausführungsform unter anderem darin, dass anstelle der Befestigungsteller 4 bereits in die Betonseitenwand 1 eingebaute Anschweißprofile 7 aus Kunststoff vorgesehen sind. Zudem gehört zu dem Abdichtungssystem 200 auch eine Leckage-Sonde 14, um eine Undichtigkeit des Abdichtungssystems anzuzeigen und - sofern vorgesehen - gegebenenfalls einen Alarm auszugeben. Bei dieser Ausführungsform kann die Kunststoffdichtungsbahn 3 in einem Arbeitsgang mit der in den Figuren 5 bis 7 gezeigten Kunststoffdichtungsbahnenverlegemaschine 30 sowohl auf den Anschweißprofilen 7, die Kunststoffdichtungsbahnen 3 untereinander an den evtl. Überlappungen als auch an den Formteilen (Formblechen) 8 und 10 aufgeschweißt bzw. verschweißt werden.

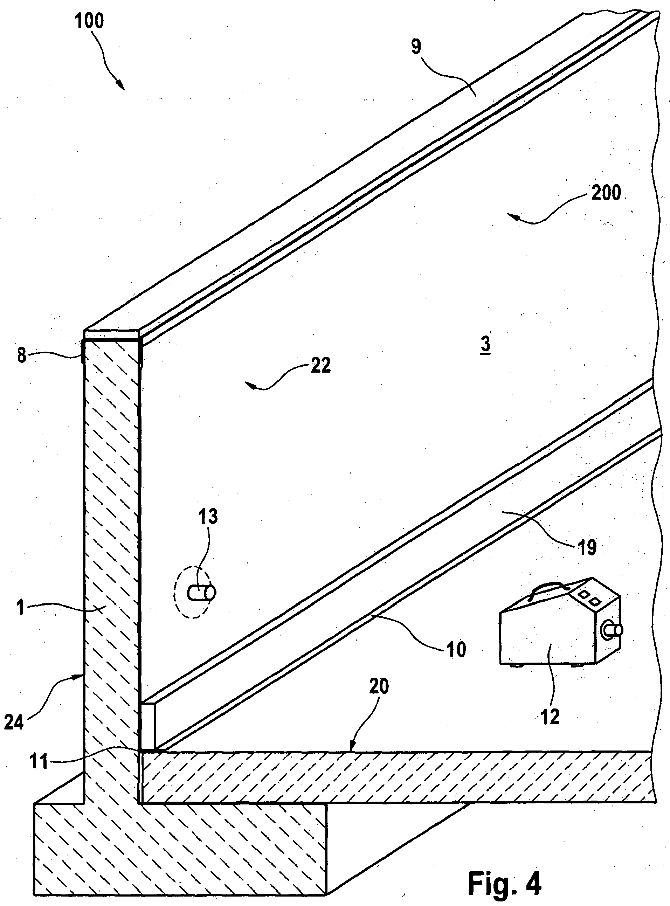

Ferner zeigt Figur 4 eine Ausführungsform, die im Prinzip mit einer der in den Figuren 1 bis 3 gezeigten Ausführungsform übereinstimmen kann, aber zusätzlich einen Schlauchanschluss 13 in den Kunststoffdichtungsbahnen 3 zum Anschließen eines handelsüblichen Nebelgenerators 12 (Rauchgasgerät) enthält, der speziell mit einer Druckregeleinheit (nicht gezeigt) ausgestattet wurde. Wenn der Nebelgenerator 12 über einen Schlauch (nicht gezeigt) an den Schlauchanschluss 13 angeschlossen und zum Beispiel eingefärbter Nebel eingeblasen wird, so tritt bei Undichtigkeiten dort der eingefärbte Nebel aus und kann die Undichtigkeit unmittelbar beseitigt werden. Die Einrichtung kann auch zum Nachweis der Dichtigkeit verwendet werden, wobei die Druckregeleinheit eine qualitative Aussage erlaubt, was bei handelsüblichen, nicht nachgerüsteten Rauchgasgeräten nicht der Fall ist.

Um während des Betriebs eventuell auftretende Undichtigkeit frühzeitig zu erkennen, können abhängig von der Siloanlage mehrere miteinander vernetzte Leckage-Sonden, wie die Leckage-Sonde 14 in der Figur 3, eingebaut werden, die im Havariefall einen externen Alarm auslösen kann. Mehrere Leckage-Sonden können über ein Steuerprogramm miteinander kommunizieren, wodurch bei einer Leckage eine Eingrenzung (abhängig vom Sondenabstand) vorgenommen werden kann.

Alternativ kann auch unter oder in die Kunststoffdichtungsbahn 3 ein Kunststoffgewebe, dass mit Metallfasern verwirkt ist, eingebaut werden, wodurch über ein computergesteuertes Spannungsfeld bei einer Leckage punktgenau die undichte Stelle angezeigt werden kann.

Wie mittels der Figuren 5 bis 7 dargestellt werden soll, kann die horizontale Verlegung der üblicherweise bis zu 150 m langen Kunststoffdichtungsbahn(en) 3, das Anordnen von Befestigungselementen, wie z. B. 4, sowie die Verschweißung der Kunststoffdichtungsbahn(en) 3 mit deren Innenseite an den Befestigungselementen maschinell in zwei Arbeitsgängen (Arbeitsfahrten) erfolgen. Dazu setzt die Kunststoffdichtungsbahnenverlegemaschine 30 in einer ersten Arbeitsfahrt die Befestigungselemente 4. In einer zweiten Arbeitsfahrt wird die Kunststoffdichtungsbahn 3 ausgerollt und mit den Befestigungselementen 4 verschweißt. Durch die horizontale Verlegung der Kunststoffdichtungsbahn(en) 3 auf Objektmaß entstehen keine senkrechten Stöße. Die Verschweißung erfolgt vorzugsweise mit Hilfe eines Heißluftschweißverfahrens, das mittels Heißluftschweißgeräte 30.6 der Kunststoffdichtungsbahnenverlegemaschine 30 durchgeführt wird. Die Befestigungselemente (Befestigungsteller) 4 können maschinell mit der Kunststoffdichtungsbahnenverlegemaschine 30 in einem beliebigen Raster abhängig von der Scher- und Schubbelastung in einer Arbeitsfahrt bzw. in einem Arbeitsgang in einer Anzahl von bis zu acht Stück gleichzeitig montiert werden. Des weiteren weist die Kunststoffdichtungsbahnenverlegemaschine 30 eine Bohr- und Ankereinheit 30.1, eine Kunststoffdichtungsbahnenabrolleinheit 30.5 sowie Andrückrollen 30.7 auf.

Die in der vorstehenden Beschreibung, in den Zeichnungen sowie in den Ansprüchen offenbarten Merkmale der Erfindung können sowohl einzeln als auch in den beliebigen Kombinationen für die Verwirklichung der Erfindung in ihren verschiedenen Ausführungsformen wesentlich sein.

### Bezugszeichenliste

- 1: Betonseitenwand
- 1a: Betonseitenwandsegmente
- 1b: Wandkrone
- 2: Dehnungsfuge
- 3: Kunststoffdichtungsbahn
- 4: Befestigungsteller aus Metall
- 5: Befestigungsstreifen
- 6: Befestigungsstreifen
- 7: Anschweißprofile
- 8: Formteil
- 9: Anfahr- bzw. Scheuerschutz
- 10: Formteil
- 11: PU-Fugenmasse
- 12: Nebelgenerator
- 13: Schlauchanschluss
- 14: Leckage-Sonde
- 19: Anfahr- bzw. Scheuerschutz
- 19.1: Gleitfläche Anfahr- bzw. Scheuerschutz, horizontal
- 19.2: Gleitfläche Anfahr- bzw. Scheuerschutz, vertikal
- 20: Bodenplatte
- 22: Innenfläche
- 24: Außenfläche
- 26: Fuge
- 30: Kunststoffdichtungsbahnenverlegemaschine
- 30.1: Bohr- und Ankereinheit
- 30.5: Kunststoffdichtungsabrolleinheit
- 30.6: Heißluftschweißgeräte
- 30.7: Andrückrollen
- 100: Flachsiloanlage
- 200: Abdichtungssystem

## Patentansprüche

1. Abdichtungssystem (200) für Innenflächen (22) von Betonseitenwänden (1) von Siloanlagen, insbesondere Flachsiloanlagen (100), umfassend:
- eine horizontal, vorzugsweise maschinell, verlegte Kunststoffbahn (3) oder mehrere horizontal, vorzugsweise maschinell, verlegte, vorzugsweise überlappend angeordnete und miteinander, vorzugsweise maschinell, verschweißte Kunststoffdichtungsbahnen (3) zur vollflächigen Abdeckung einer Innenfläche (22) einer Betonseitenwand (1) einer Siloanläge, und
- mehrere, vorzugsweise rasterförmig angeordnete, Befestigungselemente zur vorzugsweise mechanischen Befestigung der Kunststoffdichtungsbahn(en) (3) an der Innenfläche (22) der Betonseitenwand (1) der Siloanlage.

2. Abdichtungssystem (200) nach Anspruch 1, **dadurch gekennzeichnet, dass** es mindestens ein mit der Kunststoffbahn (3) oder mit mindestens einer der Kunststoffdichtungsbahnen (3) verschweißtes Formteil (8) oder Kunststoffformteil zum Abdecken mindestens eines Teils der Wandkrone (1b) der Betonseitenwand (1) der Siloanlage umfasst.

3. Abdichtungssystem (200) nach Anspruch 1 oder 2, **dadurch gekennzeichnet, dass** es einen Anfahr- und/oder Scheuerschutz (9) vorzugsweise aus Holz oder Kunststoff zum Abdecken der Wandkrone (1b) der Betonseitenwand (1) der Siloanlage umfasst.

4. Abdichtungssystem (200) nach einem der Ansprüche 1 bis 3, **dadurch gekennzeichnet, dass** es mindestens ein mit der Kunststoffbahn (3) oder mit mindestens einer der Kunststoffdichtungsbahnen (3) verschweißtes und vorzugsweise am Übergang von einer Bodenplatte (20) der Siloanlage verklebtes Formteil (10) oder Kunststoffformteil zum Abdecken einer Fuge (26) an einem Boden- oder Wandanschluss umfasst.

5. Abdichtungssystem (200) nach einem der vorangehenden Ansprüche, **dadurch gekennzeichnet, dass** es einen Anfahr- und/oder Scheuerschutz (19) vorzugsweise aus Holz oder Kunststoff im unteren Bereich der aufgehenden Betonseitenwand (1) der Siloanlage umfasst.

6. Abdichtungssystem (200) nach einem der vorangehenden Ansprüche, **dadurch gekennzeichnet, dass** mindestens eines der Befestigungselemente ein Befestigungsteller (4) vorzugsweise aus Metall mit einer Haftbeschichtung für die Kunststoffdichtungsbahn(en) (3) ist oder dass mindestens eines der Befestigungselemente ein Befestigungsstreifen (5, 6) vorzugsweise aus Metall mit Punkten oder Flächen mit einer Haftbeschichtung und/oder Klettflächen für die Kunststoffdichtungsbahn(en) (3) ist.

7. Abdichtungssystem (200) nach Anspruch 6, **dadurch gekennzeichnet, dass** der Befestigungssteller (4) oder der Befestigungsstreifen (5, 6) mit einem Einschlagdübel, Betonnagel oder Ähnliches an der Betonseitenwand (1) befestigbar ist.

8. Abdichtungssystem (200) nach einem der Ansprüche 1 bis 5, **dadurch gekennzeichnet, dass** mindestens eines der Befestigungselemente ein in die Betonseitenwand (1) eingebautes Anschweißprofil (7) vorzugsweise aus Kunststoff ist.

9. Abdichtungssystem (200) nach einem der vorangehenden Ansprüche, **dadurch gekennzeichnet, dass** mindestens eine Leckage-Sonde (14) zur Anordnung zwischen der Kunststoffdichtungsbahn (3) oder einer der Kunststoffdichtungsbahnen (3) und der Betonseitenwand (1) vorgesehen ist.

10. Siloanlage, insbesondere Flachsiloanlage (100), umfassend eine Bodenplatte (20) und mindestens eine Betonseitenwand (1) sowie ein, vorzugsweise mit der Bodenplatte (20) eine Wanne bildendes, Abdichtungssystem (200) nach einem der vorangehenden Ansprüche.

11. Siloanlage nach Anspruch 10, **dadurch gekennzeichnet, dass** ein Schlauchanschluss (13) in die Kunststoffdichtungsbahn(en) (3) zum Anschließen eines Nebel- (12) und/oder Rauchgenerators eingebaut ist.

12. Siloanlage nach einem der Ansprüche 10 oder 11, rückbezogen auf Anspruch 10, **dadurch gekennzeichnet, dass** die Leckage-Sonde (14) direkt oder indirekt mit einer Fernüberwachungszentrale zur Fernüberwachung der Siloanlage verbunden ist.

13. System, umfassend:
- eine Siloanlage nach einem der Ansprüche 10 bis 12, und
- eine Fernüberwachungszentrale zur Fernüberwachung der Siloanlage und/oder einen Nebel- (12) und/oder Rauchgenerator und eine Druckregeleinheit zum Betreiben des Nebel- (12) und/oder Rauchgenerators.

14. Verfahren zur Herstellung eines Abdichtungssystems nach einem der Ansprüche 1 bis 9, umfassend:
- vorzugsweise rasterförmiges und vorzugsweise maschinelles Anordnen von mehreren Befestigungselementen zur vorzugsweise mechanischen Befestigung der Kunststoffdichtungsbahn(en) (3) an der Innenfläche (22) der Betonseitenwand (1) der Siloanlage, und
- in einem Arbeitsgang vorzugsweise maschinelles Ausrollen der Kunststoffdichtungsbahn(en) (3) und vorzugsweise maschinelles Befestigen der Kunststoffdichtungsbahn(en) (3) an den Befestigungselementen.

15. Verfahren nach Anspruch 14, **dadurch gekennzeichnet, dass** das Anordnen der Befestigungselemente in einem dem Arbeitsgang vorgeschalteten Arbeitsgang durchgeführt wird.

16. Verfahren zum Überprüfen des Dichtigkeitszustands einer Siloanlage nach Anspruch 11 oder auf Anspruch 11 rückbezogenem Anspruch 12, mit den Schritten:
a) Anschließen eines Nebel- (12) und/oder Rauchgenerators an den Schlauchanschluss (13) und
b) Detektieren des Austritts von Nebel- und/oder Rauch aus dem Abdichtungssystem (200), insbesondere der Kunststoffdichtungsbahn (3) öder den Kunststoffdichtungsbahnen (3).

## Claims

1. Sealing system (200) for inner surfaces (22) of concrete side walls (1) of silo installations, in particular french silo installations (100), comprising:
- a horizontally, preferably mechanically, laid plastic sheet (3) or a plurality of horizontally, preferably mechanically, laid plastic sealing sheets (3) which are preferably arranged in an overlapping manner and fused with one another, preferably mechanically, for covering the whole area of an inner surface (22) of a concrete side wall (1) of a silo installation, and
- a plurality of fastening elements preferably arranged in a grid-like manner and intended for preferably mechanically fastening the plastic sealing sheet(s) (3) to the inner surface (22) of the concrete side wall (1) of the silo installation.

2. Sealing system (200) according to Claim 1, **characterized in that** it comprises a shaped part (8) or plastic shaped part which is fused with the plastic sheet (3) or with at least one of the plastic sealing sheets (3) and intended for covering at least part of the wall crown (1b) of the concrete side wall (1) of the silo installation.

3. Sealing system (200) according to Claim 1 or 2, **characterized in that** it comprises a collision and/or abrasion protector (9), preferably made of wood or plastic, for covering the wall crown (1b) of the concrete side wall (1) of the silo installation.

4. Sealing system (200) according to one of Claims 1 to 3, **characterized in that** it comprises at least one shaped part (10) or plastic shaped part for covering a joint (26) at a floor or wall connection, which shaped part is fused with the plastic sheet (3) or with at least one of the plastic sealing sheets (3) and is preferably adhesively bonded at the junction of a floor slab (20) of the silo installation.

5. Sealing system (200) according to one of the preceding claims, **characterized in that** it comprises a collision and/or abrasion protector (19), preferably made of wood or plastic, in the lower region of the upright concrete side wall (1) of the silo installation.

6. Sealing system (200) according to one of the preceding claims, **characterized in that** at least one of the fastening elements is a fastening disc (4) preferably made of metal with an adhesive coating for the plastic sealing sheet(s) (3), or in that at least one of the fastening elements is a fastening strip (5, 6) preferably made of metal with points or surfaces having an adhesive coating and/or touch-and-close surfaces for the plastic sealing sheet(s) (3).

7. Sealing system (200) according to Claim 6, **characterized in that** the fastening disc (4) or the fastening strip (5, 6) can be fastened to the concrete side wall (1) by a drive-in dowel, a concrete nail or the like.

8. Sealing system (200) according to one of Claims 1 to 5, **characterized in that** at least one of the fastening elements is a fuse-on profile (7), preferably made of plastic, installed in the concrete side wall (1).

9. Sealing system (200) according to one of the preceding claims, **characterized in that** at least one leakage probe (14) for arranging between the plastic sealing sheet (3) or one of the plastic sealing sheets (3) and the concrete side wall (1) is provided.

10. Silo installation, in particular a french silo installation (100), comprising a floor slab (20) and at least one concrete side wall (1) and also a sealing system (200) according to one of the preceding claims that preferably forms a trough with the floor slab (20).

11. Silo installation according to Claim 10, **characterized in that** a hose connection (13) is installed in the plastic sealing sheet(s) (3) for the connection of a mist generator (12) and/or smoke generator.

12. Silo installation according to either of Claims 10 and 11, when referring back to Claim 10, **characterized in that** the leakage probe (14) is directly or indirectly connected to a remote monitoring centre for remotely monitoring the silo installation.

13. System comprising:
- a silo installation according to one of Claims 10 to 12, and
- a remote monitoring centre for remotely monitoring the silo installation and/or a mist generator (12) and/or smoke generator and a pressure control unit for operating the mist generator (12) and/or smoke generator.

14. Method for producing a sealing system according to one of Claims 1 to 9, comprising:
- preferably grid-like and preferably mechanical arrangement of a plurality of fastening elements for preferably mechanically fastening the plastic sealing sheet(s) (3) to the inner surface (22) of the concrete side wall (1) of the silo installation, and
- in one work step preferably mechanically rolling out the plastic sealing sheet(s) (3) and preferably mechanically fastening the plastic sealing sheet(s) (3) to the fastening elements.

15. Method according to Claim 14, **characterized in that** the arrangement of the fastening elements is carried out in an operation preceding the work step.

16. Method for monitoring the tightness state of a silo installation according to Claim 11 or Claim 12 when referring back to Claim 11, comprising the following steps:
a) connecting a mist generator (12) and/or smoke generator to the hose connection (13) and
b) detecting the emergence of mist and/or smoke from the sealing system (200), in particular the plastic sealing sheet (3) or the plastic sealing sheets (3).

## Revendications

1. Système (200) d'étanchéité pour surfaces intérieures (22) de parois latérales (1) en béton d'installations d'ensilage et en particulier d'installations (100) d'ensilage à plat, le système comprenant :
une nappe (3) en matière synthétique, déposée à l'horizontale de préférence par machine, ou plusieurs nappes (3) d'étanchéité en matière synthétique, déposées à l'horizontale de préférence par machine, disposées de préférence en superposition et soudées les unes aux autres de préférence par machine de manière à recouvrir la totalité de la surface intérieure (22) d'une paroi latérale (1) en béton d'une installation d'ensilage et
plusieurs éléments de fixation disposés de préférence en forme de grille, pour la fixation de préférence mécanique de la ou des nappes (3) d'étanchéité en matière synthétique sur la surface intérieure (22) de la paroi latérale (1) en béton de l'installation d'ensilage.

2. Système (200) d'étanchéité selon la revendication 1, **caractérisé en ce qu'**il comporte au moins une pièce moulée (8) ou une pièce moulée en matière synthétique, soudée sur la nappe (3) de matière synthétique ou sur au moins l'une des nappes (3) d'étanchéité en matière synthétique et servant à couvrir au moins une partie de la couronne (1b) de la paroi latérale (1) en béton de l'installation d'ensilage.

3. Système (200) d'étanchéité selon les revendications 1 ou 2, **caractérisé en ce qu'**il comporte une protection (9) contre la circulation et/ou la déchirure, de préférence en bois ou en matière synthétique, destinée à couvrir la couronne (1b) de la paroi latérale (1) en béton de l'installation d'ensilage.

4. Système (200) d'étanchéité selon l'une des revendications 1 à 3, **caractérisé en ce qu'**il comporte au moins une pièce moulée (10) ou une pièce moulée en matière synthétique, soudée sur la nappe (3) de matière synthétique ou sur au moins l'une des nappes (3) d'étanchéité en matière synthétique et de préférence collée au passage vers une plaque de sol (20) de l'installation d'ensilage, pour recouvrir un joint (26) situé sur un raccord de sol ou de paroi.

5. Système (200) d'étanchéité selon l'une des revendications précédentes, **caractérisé en ce qu'**il comporte une protection (19) contre la circulation et/ou la déchirure, de préférence en bois ou en matière synthétique, dans la partie inférieure de la paroi latérale (1) en béton, sur laquelle il est possible de circuler, de l'installation d'ensilage.

6. Système (200) d'étanchéité selon l'une des revendications précédentes, **caractérisé en ce qu'**au moins l'un des éléments de fixation est une plaque de fixation (4), de préférence en métal, avec un revêtement adhérant à la ou aux nappes (3) d'étanchéité en matière synthétique ou **en ce qu'**au moins l'un des éléments de fixation est un ruban de fixation (5, 6), de préférence en métal, présentant des points ou des surfaces dotés d'un revêtement adhésif et/ou de surfaces d'accrochage pour la ou les nappes (3) d'étanchéité en matière synthétique.

7. Système (200) d'étanchéité selon la revendication 6, **caractérisé en ce que** la plaque de fixation (4) ou le ruban de fixation (5, 6) peuvent être fixés sur la paroi latérale (1) en béton à l'aide d'une cheville enfoncée par percussion, d'un clou à béton ou similaires.

8. Système (200) d'étanchéité selon l'une des revendications 1 à 5, **caractérisé en ce qu'**au moins l'un des éléments de fixation est un profilé (7) à souder, de préférence en matière synthétique, incorporé dans la paroi latérale (1) en béton.

9. Système (200) d'étanchéité selon l'une des revendications précédentes, **caractérisé en ce qu'**au moins une sonde (14) de détection de fuites destinée à être disposée entre la nappe (3) d'étanchéité en matière synthétique ou l'une des nappes (3) en matière synthétique et la paroi latérale (1) en béton est prévue.

10. Installation d'ensilage, en particulier installation (100) d'ensilage à plat, comprenant une plaque de sol (20) et au moins une paroi latérale (1) en béton ainsi qu'un système d'étanchéité (200) selon l'une des revendications précédentes, formant de préférence une cuvette avec la plaque de sol (20).

11. Installation d'ensilage selon la revendication 10, **caractérisée en ce qu'**un raccord flexible (13) est incorporé dans la ou les nappes (3) d'étanchéité en matière synthétique, en vue de raccorder un générateur (12) de buée et/ou de fumée.

12. Installation d'ensilage selon la revendication 10 ou la revendication 11 dans la mesure où elle est subordonnée à la revendication 10, **caractérisée en ce que** la sonde (14) de détection de s est raccordée directement ou indirectement à une centrale de surveillance à distance qui surveille à distance l'installation d'ensilage.

13. Système comprenant :
une installation d'ensilage selon l'une des revendications 10 à 12 et
une centrale de surveillance à distance qui surveille à distance l'installation d'ensilage et/ou un générateur (12) de buée et/ou de fumée, et
une unité de régulation de pression qui gère le générateur (12) de buée et/ou de fumée.

14. Procédé de fabrication d'un système d'étanchéité selon l'une des revendications 1 à 9, comprenant les étapes qui consistent à :
disposer, de préférence en grille et de préférence à la machine, plusieurs éléments de fixation permettant une fixation de préférence mécanique de la ou des nappes (3) d'étanchéité en matière synthétique sur la surface intérieure (22) d'une paroi latérale (1) en béton de l'installation d'ensilage et
dérouler en une étape de travail, de préférence à la machine, la ou les nappes (3) d'étanchéité en matière synthétique et, de préférence à la machine, fixer la ou les nappes (3) d'étanchéité en matière synthétique sur les éléments de fixation.

15. Procédé selon la revendication 14, **caractérisé en ce que** le placement des éléments de fixation est réalisé dans une étape qui précède l'étape.

16. Procédé de vérification de l'état d'étanchéité d'une installation d'ensilage selon la revendication 11 ou selon la revendication 12 dans la mesure où elle est subordonnée à la revendication 11, le procédé présentant les étapes qui consistent à :
a) raccorder un générateur (12) de buée et/ou de fumée au raccord flexible (13) et
b) détecter la sortie de buée et/ou de fumée hors du système d'étanchéité (200) et en particulier de la nappe (3) d'étanchéité en matière synthétique ou des nappes (3) d'étanchéité en matière synthétique.
